(19) Europäisches Patentamt / European Patent Office / Office européen des brevets

(11) **EP 4 332 281 A1**

(12) **EUROPEAN PATENT APPLICATION**
published in accordance with Art. 153(4) EPC

(43) Date of publication:
06.03.2024 Bulletin 2024/10

(21) Application number: 22825175.7

(22) Date of filing: 25.05.2022

(51) International Patent Classification (IPC):
*D01F 6/60* (2006.01)    *D01F 6/80* (2006.01)
*D01F 1/10* (2006.01)    *D01D 1/10* (2006.01)
*D01D 5/06* (2006.01)    *D01D 10/06* (2006.01)

(52) Cooperative Patent Classification (CPC):
D01D 1/10; D01D 5/06; D01D 10/06; D01F 1/10;
D01F 6/60; D01F 6/80

(86) International application number:
PCT/KR2022/007456

(87) International publication number:
WO 2022/265249 (22.12.2022 Gazette 2022/51)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 17.06.2021 KR 20210078797

(71) Applicant: Kolon Industries, Inc.
Seoul 07793 (KR)

(72) Inventor: LEE, Hyo Jin
Seoul 07793 (KR)

(74) Representative: Ter Meer Steinmeister & Partner
Patentanwälte mbB
Nymphenburger Straße 4
80335 München (DE)

(54) **PARA-ARAMID FIBER AND PREPARATION METHOD THEREFOR**

(57) The present invention relates to a para-aramid fiber and a preparation method therefor. The para-aramid fiber has a high orientation and crystallinity, and thus exhibits excellent tensile properties.

**Description**

[TECHNICAL FIELD]

The present invention relates to a para-aramid fiber and a preparation method therefor.

[BACKGROUND ART]

Aramid fibers comprising aromatic dicarboxylic acid components and aromatic diamine components, particularly para-aramid fibers such as polyparaphenylene terephthalamide (PPTA) fibers, are excellent in tenacity, elastic modulus and heat resistance, and thus, is widely used in industrial applications and clothing material applications. However, mechanical properties such as tenacity and elastic modulus are not yet sufficient for some applications, and efforts have been made to provide fibers with more excellent physical properties.

[DETAILED DESCRIPTION OF THE INVENTION]

[Technical Problem]

It is an object of the present invention to provide a para-aramid fiber and a preparation method therefor.

[Technical Solution]

Now, a para-aramid fiber and a preparation method therefor according to specific embodiments of the present invention will be described.

According to one embodiment of the invention, there is provided a para-aramid fiber comprising a plurality of monofilaments, wherein the para-aramid fiber has: a crystallinity of 67% or more, an orientation angle based on 110 plane of 2 to 12°, a total fineness of 200 to 1,600 de, and a tenacity of 22 g/d or more.

According to another embodiment of the invention, there is provided a preparation method of the para-aramid fiber, the preparation method comprising the steps of: filtering a reaction raw material to remove impurities; adding an aromatic diamine to a mixed solvent containing an organic solvent and an inorganic salt to form a slurry; adding an aromatic diacid halide three or more times to a reactor containing the slurry and then reacting them to form a para-aramid polymer; and spinning a spinning dope containing the para-aramid polymer to produce a fiber, wherein in the step of forming the polymer, the cooling water temperature difference between a cooling water inlet and a cooling water outlet for cooling the reactor during the primary and secondary additions of the aromatic diacid halide is controlled within 50°C.

Unless otherwise specified herein, physical properties such as tensile properties and measured values for microstructure of para-aramid fibers are values measured for fibers obtained after ordinary spinning, coagulation and drying, which are values measured for fibers in a state where a heat treatment step capable of being added to the fiber preparation method is not performed.

The present inventors have found through experiments that when using a para-aramid polymer produced by a specific polymerization method, it is possible to provide a para-aramid fiber that has a high orientation and crystallinity and thus, can exhibit excellent tensile properties, and completed the present invention.

A preparation method of a para-aramid fiber (hereinafter briefly referred to as 'preparation method') and the para-aramid fiber produced therefrom will be described in detail below.

In the preparation method, it is possible to minimize the residual amount of inorganic impurities in the final polymer through the step of removing impurities from the reaction raw material, thereby providing a para-aramid fiber with excellent mechanical strength.

The reaction raw material includes an organic solvent, an inorganic salt, an aromatic diamine and an aromatic diacid halide. In the step of filtering the reaction raw materials to remove impurities, at least one of the listed reaction raw materials can be filtered to remove impurities contained in the corresponding raw material. In one example, in the step of filtering the reaction raw material to remove impurities, an organic solvent, an inorganic salt, an aromatic diamine, and an aromatic diacid halide can each be filtered to prepare a reaction raw material from which impurities are removed.

In the step of filtering the reaction raw material to remove impurities, the reaction raw material can be filtered using a filter with a diameter of 0.01 to 1.0 $\mu$m, 0.03 to 0.7 $\mu$m, or 0.05 to 0.5 $\mu$m. The diameter may be the length of the major axis of the filtration hole of the filter. By using a filter having such a diameter, the content of inorganic impurities in the reaction system can be reduced to 1 ppm or less. Further, the content of inorganic impurities in the polymerized polymer can be lowered to 50 ppb or less by using a filter with the above diameter. A lower limit of the content of inorganic impurities may be 0 ppb or more.

The order of performing the step of filtering the reaction raw material to remove impurities is not particularly limited. Specifically, the step of filtering the reaction raw material to remove impurities can be performed before the step of forming the slurry or during the step of forming the slurry. In one example, when the step of filtering the reaction raw material to remove impurities is performed during the step of forming the slurry, an organic solvent and an inorganic salt are mixed, and the mixture is filtered to prepare a mixed solvent, and an aromatic diamine from which impurities are removed by separate filtration is added to the mixed solvent to thereby form a slurry.

Meanwhile, in the step of forming the slurry, a mixed solvent can be prepared by adding an inorganic salt to an organic solvent in order to increase the degree of polymerization of the para-aramid polymer.

The inorganic salt included in the mixed solvent may include an alkali metal halide salt or an alkaline earth metal halide salt. In one example, the inorganic salt may include at least one selected from the group consisting of $CaCl_2$, LiCl, NaCl, KCl, LiBr, and KBr. The inorganic salt may be included in an amount of 0.01 to 15 wt.%, 0.05 to 13 wt.%, 0.1 to 11 wt.%, or 1 to 10 wt.% based on the total weight of the mixed solvent.

The organic solvent included in the mixed solvent may include at least one selected from the group consisting of N-methyl-2-pyrrolidone, N,N-dimethylacetamide, hexamethylphosphoramide, N,N,N',N'-tetramethyl urea, N,N-dimethylformamide and dimethyl sulfoxide. The organic solvent may be contained in the remaining amount excluding the inorganic salt based on the total weight of the mixed solvent.

In the step of forming the slurry, a mixed solvent and an aromatic diamine may be mixed so that the content of aromatic diamine in the slurry is 0.5 to 10 wt.%.

As the aromatic diamine, at least one selected from the group consisting of p-phenylenediamine, 4,4'-oxydianiline, 2,6-naphthalenediamine, 1,5-naphthalenediamine, and 4,4'-diaminobenzanilide may be used.

Then, in the step of forming the para-aramid polymer, the para-aramid polymer can be produced by adding an aromatic diacid halide to the previously prepared slurry and then reacting them.

As the aromatic diacid halide, at least one selected from the group consisting of terephthaloyl dichloride, [1,1'-biphenyl]-4,4'-dicarbonyl dichloride, 4,4'-oxybis(benzoyl chloride), naphthalene-2,6-dicarbonyl dichloride, naphthalene-1,5-dicarbonyl dichloride, and the like may be used.

Since the aromatic diacid halide reacts with the aromatic diamine in a molar ratio of 1:1, the molar ratio of the aromatic diacid halide to the aromatic diamine may be about 0.9 to 1.1.

A polymerization reaction between the aromatic diamine and the aromatic diacid halide proceeds at a high rate with heat generation. Therefore, conventionally, a part of the aromatic diacid halide is first added to perform pre-polymerization, and then the rest of the aromatic diacid halide is added to minimize the difference in degree of polymerization between the final polymers.

In the preparation method according to another embodiment, in addition to the conventionally used method, a reaction raw material from which impurities are removed is used, and the addition condition and addition method of the reaction raw material are controlled, thereby capable of providing a para-aramid fiber having a high orientation and a high crystallinity, as well as a small difference in degree of polymerization between polymers.

Specifically, in the preparation method according to the other embodiment, the aromatic diacid halide is dividedly added three or more times instead of the conventional method in which the aromatic diacid halide is dividedly added two times, and during the primary and secondary addition of the aromatic diacid halide, the temperature difference of the cooling water entering and exiting the reactor is controlled within 50°C, thereby providing a para-aramid fiber having a desired high orientation and high crystallinity.

Specifically, in the step of forming the polymer, a reactor through which cooling water can enter and exit is used.

In the step of forming the slurry, the slurry may be prepared within a reactor, or may be prepared in a container other than the reactor and then introduced into the reactor. In the step of forming the polymer, an aromatic diacid halide is added three times or more to the reactor containing the slurry. In particular, the aromatic diacid halide may be added primarily and secondarily in a state where the cooling water temperature difference between a cooling water inlet and a cooling water outlet of the reactor is controlled to 0°C to 50°C.

More specifically, the temperature difference between a cooling water inlet and a cooling water outlet during the primary addition of the aromatic diacid halide may be controlled to 0 °C to 50 °C, 0° C to 40°C, 0° C to 35°C, or 0°C to 30°C.

Further, the temperature difference between the cooling water inlet and the cooling water outlet during secondary addition of the aromatic diacid halide may be controlled to 0°C to 50°C, 0°C to 40°C, 0°C to 35°C, or 0°C to 30°C.

In order to control the cooling water temperature difference between the cooling water inlet and the cooling water outlet within the above range, the stirring speed of the reactor may be adjusted to 10 to 1000 rpm, 10 to 900 rpm, 10 to 700 rpm, or 10 to 500 rpm while the cooling water in the reactor is circulating.

The content of the primarily added aromatic diacid halide may be adjusted to 20 to 40 mol% or 25 to 35 mol% based on the total content of the added aromatic diacid halide. Within such a range, a prepolymer having a molecular chain of an appropriate length can be formed.

After primarily adding the aromatic diacid halide, pre-polymerization can be performed by stirring the mixture at a temperature of 0°C to 45°C for 1 minute to 30 minutes or 5 minutes to 15 minutes.

Then, in order to control the cooling water temperature difference between the cooling water inlet and the cooling water outlet again within 50°C, the stirring speed of the reactor may be adjusted to 10 to 1000 rpm, 10 to 900 rpm, 10 to 700 rpm, or 10 to 500 rpm while cooling water is circulating in the reactor.

The content of the secondarily added aromatic diacid halide may be adjusted to 20 to 75 mol%, 40 to 75 mol%, or 50 to 70 mol% based on the total amount of the aromatic diacid halide to be added. Within such a range, it is possible to form a polymer capable of providing fibers having a high orientation and a high crystallinity while minimizing the difference in degree of polymerization between the polymers.

After secondarily adding the aromatic diacid halide, polymerization may be performed by stirring the mixture at a temperature of 0°C to 45°C for 1 minute to 30 minutes or 5 minutes to 15 minutes.

Then, the aromatic diacid halide of the remaining content is dividedly added one or more times, and then further polymerized to finally produce a para-aramid polymer. Further polymerization may be performed by stirring the mixture at a temperature of 0°C to 45°C for about 5 minutes to 1 hour or about 10 minutes to 40 minutes.

After the step of forming the polymer, any one or more steps of separating the produced polymer from the polymerization reaction system, washing the polymer, neutralizing the polymer, and pulverizing the polymer are performed regardless of the stated order.

The para-aramid polymer may have an intrinsic viscosity of 4.0 dl/g or more, 5.0 dl/g or more, or 5.3 dl/g or more, and 9.0 dl/g or less.

Further, the para-aramid polymer may have an intrinsic viscosity deviation of 1.0 dl/g or less, 0.9 dl/g or less, or 0.8 dl/g or less. As the intrinsic viscosity deviation of the para-aramid polymer is smaller, it is more advantageous, so that the lower limit of the intrinsic viscosity deviation may be 0 dl/g or more.

The intrinsic viscosity deviation may be obtained by dividing the washed and dried para-aramid polymer into a group of 2 mm or more, a group of 1 mm or more and less than 2 mm, and a group of less than 1 mm using a standard sieve having mesh sizes of 1 mm and 2 mm, respectively, and measuring the intrinsic viscosity of each group, and then calculating the difference between the maximum and minimum values of the average intrinsic viscosity of the three groups.

The para-aramid polymer is produced from the reaction raw material from which impurities have been removed, and thus, may have very little or no inorganic impurities remaining in the polymer. In one example, the content of inorganic impurities in the polymer may be 50 ppb or less.

The para-aramid polymer may be poly(para-phenylene terephthalamide), poly(4,4'-benzanilide terephthalamide), poly(paraphenylene-4,4'-biphenylene-dicarbonyl amide), poly(paraphenylene-2,6-naphthalenedicarbonyl amide) or copolymers thereof. In one example, the para-aramid polymer may be poly(para-phenylene terephthalamide).

Meanwhile, in the step of producing the fiber, a spinning dope containing the polymer produced in the polymer forming step is spun to provide a fiber.

Sulfuric acid with a concentration of 97 to 102 wt.% can be used as a solvent of the spinning dope. As the solvent, chlorosulfuric acid, fluorosulfuric acid, or the like can be used instead of sulfuric acid.

The viscosity of the spinning dope for producing fibers increases as the concentration of the para-aramid polymer in the spinning dope increases. However, when the concentration of the para-aramid polymer exceeds the critical concentration, the viscosity of the spinning dope decreases abruptly. At this time, the spinning dope changes from optical isotropy to optical anisotropy without forming a solid phase. Optically anisotropic dopes can provide high tenacity para-aramid fibers without a separate drawing step due to their structural and functional properties. Therefore, the concentration of the para-aramid polymer in the spinning dope preferably exceeds the critical concentration, but if the concentration is too high, the viscosity of the spinning dope may be too low. Therefore, the spinning dope may contain the para-aramid polymer in an amount of 10 to 25 wt.% based on the total weight of the spinning dope.

In the step of producing the fiber, a spinning step of spinning the spinning dope may be performed.

In the spinning step, the spinning dope may be spun into a filament through air-gap wet spinning.

The air-gap wet spinning is a method in which an air-gap is placed between the spinneret and the coagulation bath surface. According to such an air-gap wet spinning method, the spinning dope can be spun into a coagulation tank containing a coagulation liquid through an air gap through a spinneret.

In the spinning process, the thickness of the fiber can be controlled by the pressure and spinning speed when the spinning dope is extruded from the spinneret.

The spinneret may comprise a plurality of holes capable of spinning the spinning dope.

Specifically, the spinneret may comprise 50 to 3000 holes, 100 to 2000 holes, 120 to 1500 holes, or 500 to 1200 holes. Within such a range, a para-aramid fiber having a high orientation and a high crystallinity and thus exhibiting excellent tensile properties can be provided.

The diameter of the hole formed in the spinneret should be adjusted to an appropriate size, which can improve the molecular orientation both on the surface and inside the filaments. In this aspect, the diameter of the hole of the spinneret may be adjusted to 50 $\mu$m or more, and 100 $\mu$m or less.

In the spinning step, the spinning dope may be spun at a spinning speed of 80 m/min or more and 800 m/min or less.

Specifically, the spinning dope can be spun at a spinning speed of 80 to 800 m/min, 100 to 800 m/min, 300 to 800 m/min, 500 to 700 m/min, 550 to 660 m/min, 580 to 650 m/min, 580 to 640 m/min or 590 to 610 m/min. Within such a range, a para-aramid fiber having a high orientation and a high crystallinity and thus exhibiting excellent tensile properties can be provided.

The dope spun through the spinneret results in uncoagulated filaments in which sulfuric acid is distributed over a matrix in which a para-aramid polymer is homogeneously distributed. Such uncoagulated filaments may be coagulated while passing through the coagulation tank containing the coagulation liquid through the air gap.

The air gap may be an air layer or an inert gas layer. In one example, the air gap may be a nitrogen layer supplied with dry nitrogen (dry $N_2$). The length of the air gap may be adjusted to 0.1 to 15 cm.

The dope spun from the spinneret and passed through the air gap forms filaments while the sulfuric acid inside is removed in the process of passing through the coagulation tank. At this time, if sulfuric acid is rapidly removed from the filament surface, the filament surface is solidified before the sulfuric acid contained therein escapes therefrom, so that the uniformity of the inside and outside of the filament may be deteriorated. Therefore, the coagulation liquid contained in the coagulation tank is preferably an aqueous solution of sulfuric acid containing sulfuric acid. Specifically, the coagulation liquid contained in the coagulation tank may be an aqueous solution of sulfuric acid in which sulfuric acid is added to water. Further, a monohydric alcohol (monool) such as methanol, ethanol or propanol, a dihydric alcohol (diol) such as ethylene glycol or propylene glycol, or a trihydric alcohol (triol) such as glycerol may further be added to the coagulation liquid, if necessary.

The temperature of the coagulating liquid is preferably 1 to 10°C. If the temperature of the coagulating liquid is too low, it may be difficult for sulfuric acid to escape from the filament. If the temperature of the coagulation liquid is too high, sulfuric acid may escape rapidly from the filaments, which may deteriorate filament uniformity.

A coagulation tube may be formed in the lower part of the coagulation tank. The coagulation tube is connected to the coagulation tank, and a plurality of jetting orifices may be formed in the coagulation tube. In this case, the jetting orifices are connected to a predetermined jet device, so that the coagulation liquid jetted from the jetting device is jetted to the filament passing through the coagulation tube via the jetting orifice. The plurality of jetting orifices are preferably aligned so that the coagulation liquid can be symmetrically jetted with respect to the filaments. The jetting angle of the coagulation liquid is preferably 0 to 85° with respect to the axial direction of the filament, and in particular, a jetting angle of 20 to 40° is suitable, particularly in a commercial production process. In the step of producing the fiber, a washing step of removing sulfuric acid remaining in the coagulated filaments may be performed subsequent to the coagulation step.

The washing step may be performed by jetting water or a mixed solution of water and an alkali solution onto the coagulated filaments.

The washing step may be performed in multiple stages. For example, the coagulated filament may be primarily washed with a 0.1 to 1.5 wt.% aqueous caustic solution, and then washed secondarily with a more dilute aqueous caustic solution.

In the step of producing the fiber, a drying step of adjusting the moisture content remaining in the filament may be performed subsequent to the coagulation and washing step.

The drying step may be performed by adjusting the time when the filaments contact with the heated drying rolls, or by adjusting the temperature of the drying rolls. The monofilament constituting the finally obtained para-aramid fiber may have a fineness of 1.0 to 2.5 de (denier).

Further, the para-aramid fiber may include a plurality of the monofilaments and have a total fineness of 200 to 1,600 de, 200 to 400 de, 800 to 1,000 de, 1,000 to 1,100 de, or 1,400 to 1,600 de.

A para-aramid fiber produced according to such a preparation method exhibits a high crystallinity and orientation, and thus can exhibit excellent tensile properties.

As the para-aramid fiber is produced according to the above preparation method, it can exhibit a high orientation. That is, the para-aramid fiber can have a high orientation degree and a small orientation angle.

In one example, the para-aramid fiber may have an orientation angle based on 110 plane of 2° or more, 5° or more, or 7° or more, and 12° or less, 11° or less, 10.5° or less, 10° or less, 9.5° or less, 9.3° or less, 9.1° or less, or 9.0° or less. Further, the para-aramid fiber may have an orientation angle based on 200 plane of 2° or more, 5° or more, or 8° or more, and 13° or less, 12° or less, 11.5° or less, 11.2° or less, 11° or less, 10.5° or less, or 10.3° or less.

The orientation angle is an orientation angle analyzed from an X-ray diffraction pattern, and for more detailed measurement methods, refer to the method described in Test Examples described later.

Further, as the para-aramid fiber is produced according to the above preparation method, it can have a high crystallinity.

Specifically, the para-aramid fiber may have a crystallinity of 67% or more, 68% or more, 68.5% or more, 69% or more, 70% or more, 71% or more, 72% or more, or 72.5% or more, and 78% or less, 75% or less, or 73% or less.

The crystallinity is a crystallinity analyzed from the X-ray diffraction pattern, and for more detailed measurement methods, refer to the method described in Test Examples described later.

As the para-aramid fiber is produced according to the above preparation method, it can have a large apparent crystal size. In one example, the para-aramid fiber may have an apparent crystal size based on 110 plane of 5.8 nm or more, 5.9 nm or more, 6.0 nm or more, or 6.2 nm or more, and 7.0 nm or less, 6.8 nm or less, or 6.6 nm or less. Further, the para-aramid fiber can have an apparent crystal size based on 200 plane of 5.0 nm or more, 5.5 nm or more, or 5.6 nm or more, and 6.5 nm or less, 6.4 nm or less, or 6.2 nm or less.

The apparent crystal size is an apparent crystal size analyzed from an X-ray diffraction pattern, and for more detailed measurement methods, refer to the method described in Test Examples described later.

As the para-aramid fiber is produced according to the above preparation method, it can minimize a paracrystalline parameter.

In one example, the para-aramid fiber may have a paracrystalline parameter of 1.00% or more or 1.30% or more, and 1.85% or less, 1.80% or less, 1.70% or less, or 1.60% or less.

The paracrystalline parameter is a paracrystalline parameter analyzed from an X-ray diffraction pattern, and for more detailed measurement methods, refers to the method described in Test Examples described later.

As the para-aramid fiber has a high orientation and crystallinity, it can exhibit excellent tensile properties.

In one example, the para-aramid fiber may have a tenacity of 22 g/d or more, 22.5 g/d or more, 23 g/d or more, 23.5 g/d or more, 24 g/d or more, or 25 g/d or more, and 30 g/d or less or 28 g/d or less. Further, the para-aramid fiber may have a Young's modulus of 750 g/d or more, 760 g/d or more, 780 g/d or more, 790 g/d or more, 800 g/d or more, or 810 g/d or more, and 900 g/d or less, 880 g/d or less, or 860 g/d or less. The para-aramid fiber may have an elongation of 2.0% or more, 2.5% or more, 3.0% or more, 3.1% or more, 3.2% or more, 3.3% or more, or 3.4% or more, and 4.5% or less or 4.0% or less.

The tensile properties such as tenacity, Young's modulus and elongation are tensile properties measured according to the ASTM D885 standard test method with respect to a sample with a twist multiplier of 1.1, and for more detailed measurement methods, refer to the method described in Test Examples described later.

[Advantageous Effects]

The para-aramid fiber according to one embodiment of the invention has a high orientation and crystallinity, and thus can exhibit excellent tensile properties.

[DETAILED DESCRIPTION OF THE EMBODIMENTS]

Hereinafter, the actions and effects of the present invention will be described in more detail with reference to the specific examples. However, these are for illustrative purposes only, and the scope of the present invention is not intended to be limited thereby in any way.

Test Example 1: Evaluation of physical properties of para-aramid polymer

The physical properties of the para-aramid polymers obtained in Synthesis Examples below were measured according to the methods described below.

(1) Measurement of intrinsic viscosity

The intrinsic viscosity of the polymer was measured according to Equation 1 below.

$$[\text{Equation } 1]$$

$$I.V. = \ln(\eta_{rel})/C$$

in Equation 1, ln is a natural logarithmic function, C is the concentration of the polymer solution (a solution wherein 0.5 g of the polymer is dissolved in 100 mL of 98 wt.% concentrated sulfuric acid), and the relative viscosity ($\eta_{rel}$) is the ratio of a flowing time between the polymer solution and the solvent as measured by a capillary viscometer at 30°C.

(2) Measurement of intrinsic viscosity deviation

The washed and dried polymers were divided into a group of 2 mm or more, a group of 1 mm or more and less than 2 mm, and a group of less than 1 mm using a standard sieve having mesh sizes of 1 mm and 2 mm, respectively.

Then, the intrinsic viscosity of each group was measured, and then the difference between the maximum and minimum values of the average intrinsic viscosities of the three groups was calculated to obtain the intrinsic viscosity deviation of the polymer.

(3) Content of inorganic impurities

The content of inorganic impurities in the para-aramid polymer was measured by the following method. 1g of a sample was completely decomposed by acid treatment, and then the concentration of inorganic impurities ionized and remaining in the sample was measured using an inductively coupled plasma spectrophotometer.

Synthesis Example 1: Preparation of para-aramid polymer (PPTA-1)

N-methyl-2-pyrrolidone (NMP), $CaCl_2$, p-phenylenediamine (PPD) and terephthaloyl chloride (TPC) as reaction raw materials were passed through a filter with a diameter of 0.1 $\mu$m to remove impurities in the reaction raw materials.
A mixed solvent in which NMP as an organic solvent and $CaCl_2$ as an inorganic salt was mixed in a weight ratio of 92:8 was put into a reactor under a nitrogen atmosphere, and PPD was added thereto so that the concentration of PPD in the slurry was 5 wt.% to prepare a slurry.
Then, TPC corresponding to 30 mol% of the number of moles of PPD was added to a reactor cooled to 30°C, and then reacted for 10 minutes. At this time, the stirring speed of the reactor was adjusted to about 200 rpm, so that the cooling water temperature difference between the cooling water inlet and the cooling water outlet was controlled to be 20°C.
Subsequently, TPC corresponding to 60 mol% of the number of moles of PPD was added to a reactor cooled to 30°C, and then reacted for 30 minutes. At this time, the stirring speed of the reactor was adjusted to about 200 rpm, so that the temperature difference between a cooling water inlet and a cooling water outlet was controlled to be about 20°C.
Finally, TPC corresponding to 10 mol% of the number of moles of PPD was added to a reactor cooled to 30°C, and then reacted for 30 minutes to prepare a para-aramid polymer.
Water and NaOH were added to the solution containing the para-aramid polymer to neutralize the acid. Then, after pulverizing the para-aramid polymer, the polymerization solvent contained in the para-aramid polymer was extracted with water, followed by dehydration and drying to finally obtain PPTA-1.
The intrinsic viscosity of PPTA-1 thus produced was 5.4 dl/g, and the content of inorganic impurities in the polymer was 48 ppb. In addition, using a standard sieve with mesh sizes of 1 mm and 2 mm, respectively, they were classified into a group of 2 mm or more, a group of 1 mm or more and less than 2 mm, and a group of less than 1 mm, and the intrinsic viscosity of each group was measured. Then, the intrinsic viscosity deviation calculated as the difference between the maximum and minimum values of average intrinsic viscosity was 0.85 dl/g.

Synthesis Example 2: Preparation of para-aramid polymer (PPTA-2)

A mixed solvent in which NMP as an organic solvent and $CaCl_2$ as an inorganic salt was mixed in a weight ratio of 86:14 was put into a reactor under a nitrogen atmosphere, and PPD was added thereto so that the concentration of PPD in the slurry was 3 wt.% to prepare a slurry.
Then, TPC corresponding to 30 mol% of the number of moles of PPD was added to a reactor cooled to 0°C, and then reacted at 5°C for 30 minutes.
After 30 minutes, the temperature difference between the cooling water inlet and the cooling water outlet was 65°C, and TPC corresponding to 60 mol% of the number of moles of PPD was added to the reactor, and then reacted at 5°C for 20 minutes. TPC corresponding to 10 mol% of the number of moles of PPD was added to the reactor, and then reacted at 5°C for5 minutes to prepare a para-aramid polymer.
Water and NaOH were added to the solution containing the para-aramid polymer to neutralize the acid. Then, after pulverizing the para-aramid polymer, the polymerization solvent contained in the para-aramid polymer was extracted with water, followed by dehydration and drying to finally obtain PPTA-2.
The intrinsic viscosity of PPTA-2 thus produced was 5.4 dl/g, and the content of inorganic impurities in the polymer was 3150 ppb. In addition, using a standard sieve with a mesh size of 1 mm and 2 mm, respectively, they were classified into a group of 2 mm or more, a group of 1 mm or more and less than 2 mm, and a group of less than 1 mm, and the intrinsic viscosity of each group was measured. Then, the intrinsic viscosity deviation calculated as the difference between the maximum and minimum values of average intrinsic viscosity was 1.3 dl/g.

Example 1: Production of para-aramid fiber

A spinning dope was prepared by dissolving PPTA-1 obtained in Synthesis Example 1 in 99.8 wt.% sulfuric acid in an amount of 19 wt.% based on the total weight of the spinning dope.

The spinning dope was spun at a speed of 650 m/min through a spinneret having 133 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.47 de and a total fineness of 213 de.

Example 2: Production of para-aramid fiber

A spinning dope was prepared by dissolving PPTA-1 obtained in Synthesis Example 1 in 99.8 wt.% sulfuric acid in an amount of 19 wt.% based on the total weight of the spinning dope.

The spinning dope was spun at a speed of 620 m/min through a spinneret having 655 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.43 de and a total fineness of 988 de.

Example 3: Production of para-aramid fiber

A spinning dope was prepared by dissolving PPTA-1 obtained in Synthesis Example 1 in 99.8 wt.% sulfuric acid in an amount of 20 wt.% based on the total weight of the spinning dope.

The spinning dope was spun at a speed of 600 m/min through a spinneret having 655 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.50 de and a total fineness of 1022 de.

Example 4: Production of para-aramid fiber

A spinning dope was prepared by dissolving PPTA-1 obtained in Synthesis Example 1 in 99.8 wt.% sulfuric acid in an amount of 19 wt.% based on the total weight of the spinning dope.

The spinning dope was spun at a speed of 650 m/min through a spinneret having 1000 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.54 de and a total fineness of 1550 de.

Comparative Example 1: Production of para-aramid fiber

A spinning dope was prepared by dissolving PPTA-2 obtained in Synthesis Example 2 in 99.8 wt.% sulfuric acid in an amount of 19 wt.% based on the total weight of the spinning dope.

The spinning dope was spun at a speed of 600 m/min through a spinneret having 1000 holes, and coagulated in a coagulation tank through an air gap to produce filaments.

The coagulated filaments were washed with water to remove sulfuric acid or the like remaining on the filaments, dried, and then wound to obtain para-aramid fibers having a monofilament fineness of 1.49 de and a total fineness of 1527 de.

For reference, when the spinning speed of PPTA-2 obtained in Synthesis Example 2 was set to be the same as in Example 4, various physical properties are inferior, so it was produced to have the same level of fineness as the para-aramid fiber of Example 4, but the spinning speed was adjusted at a rate optimized for PPTA-2 obtained in Synthesis Example 2.

Test Example 2: Evaluation of physical properties of para-aramid fiber

The physical properties of the para-aramid fibers obtained in Examples and Comparative Examples were measured according to the methods described below, and the results are shown in Table 1 below.

(1) Fineness (denier, de)

Fineness is the denier (de) expressed in weight (g) of 9000 m yarn, which is measured according to ASTM D 1577.

(2) Tensile properties

Para-aramid fibers produced in Examples and Comparative Examples were cut into a length of 250 mm to prepare a sample twisted with TM (twist multiplier) of 1.1, and the sample was stored for 14 hours at a relative humidity of 55% and a temperature of 23°C.

Then, according to the ASTM D885 standard test method, the sample was mounted on INSTRON's tester (Instron Engineering Corp, Canton, Mass), one side of the fiber was fixed, and the initial load was set to 1/30 g of the fineness (fineness X 1 / 30 g), and then the other side was stretched at a speed of 25 mm/min, and the tensile load (g) and elongation (strain) when the fiber was broken were measured. The tenacity (g/d) was obtained by dividing the measured tensile load by the fineness, and the Young's modulus was obtained from the slope of the stress-strain curve of the para-aramid fiber obtained under the above tensile load measurement conditions.

(3) X-ray diffraction (XRD) analysis

The microstructure of the para-aramid fibers prepared in Examples and Comparative Examples was analyzed through X-ray diffraction patterns.

The para-aramid fibers produced in Examples and Comparative Examples were cut into a length of 20 to 30 mm, aligned as much as possible, and then attached to a holder to prepare samples. The prepared samples were hung on the sample attachment, and the β-position was set to 0°. After warming-up, the voltage and current of the XRD measuring device were gradually raised to the measurement conditions of 50 kV and 180 mA, and the equatorial pattern was measured. In addition, the main measurement conditions were set as follows.

Goniometer, continuous scan mode, scan angle range: 10 to 40°, Scan speed: 2.

The 2θ positions of two peaks appearing between 20 to 21° and 22 to 23° in the scanned profile were measured. The measured profile was processed with a multi peak separation method program.

After a background was assigned linearly from 15° to 35° at the 2θ, two crystal peaks were separated to obtain an X-ray diffraction pattern.

i) Apparent crystal size (ACS)

Using the X-ray diffraction pattern and a factor [2θ Position, Intensity Full Width at Half Maximum (FWHM)], the apparent crystal size (ACS) was obtained when K of each crystal plane was 1 by the Scherrer Equation. Here, the apparent crystallite size (ACS) means the average size of the corresponding plane crystal.

ii) Crystallinity (Xc)

The crystallinity was obtained through the ratio between the crystalline peak and the amorphous peak using the X-ray diffraction pattern.

iii) Orientation angle (OA)

After performing azimutal scan at the position of each side of the X-ray diffraction pattern, the full width at half maximum (FWHM) of each peak was determined to obtain the orientation angle.

iv) Paracrystalline parameter ($g_{\parallel}$)

The para-aramid fibers prepared in Examples and Comparative Examples were cut into a length of 20 to 30 mm, aligned as much as possible, and then attached to a holder to prepare samples. The prepared samples were hung on the sample attachment and the β-position was set to 0°. After warming-up, the voltage and current of the XRD measuring device were gradually raised to the measurement conditions of 50 kV and 180 mA, and the meridional pattern was measured. In addition, the main measurement conditions were set as follows.

Goniometer, continuous scan mode, scan angle range: 10 to 40°, scan speed: 0.5 [The step/scan time gives enough beam exposure time to get 2,000 CPS because the intensity of the peak is insignificant].

The 2θ position of the peak (002 plane) appearing between 10 and 15° in the scanned profile was measured. The paracrystalline parameter was derived by substituting the measured profile into the HOSEMANN equation of Equation 2 below.

[Equation 2]

$$(\delta_S)_0^2 = (\delta_S)_c^2 + (\delta_S)_{II}^2 = \frac{1}{L_{wd}^2} + \frac{(\pi g_{II})^4 m^4}{d_{wd}^2}$$

in Equation 2, 6s is the dispersity of the diffraction peak, L is the crystal size, d is the spacing of the lattice plane, and m is the order of the diffraction peak.

[Table 1]

| | | Example 1 | Example 2 | Example 3 | Example 4 | Comparative Example 1 |
|---|---|---|---|---|---|---|
| Tensile properties | Tenacity (g/d) | 23.2 | 22.7 | 27.4 | 23.9 | 22.3 |
| | Young's modulus (g/d) | 798 | 767 | 820 | 751 | 742 |
| | Elongation (%) | 3.02 | 3.17 | 3.44 | 3.49 | 3.32 |
| XRD* | Crystal size (nm) | 5.9 (110) 5.7 (200) | 5.8 (110) 5.5 (200) | 6.4 (110) 5.8 (200) | 6.0 (110) 5.7 (200) | 5.7(110) 5.5 (200) |
| | Crystallinity (%) | 72.3 | 68.5 | 72.8 | 69.5 | 68.3 |
| | Orientation angle (°) | 8.6 (110) 9.8 (200) | 10.2 (110) 11.4 (200) | 9.0 (110) 10.2 (200) | 9.9 (110) 11.1 (200) | 12.1 (110) 13.4 (200) |
| | Paracrystalline parameter (%) | 1.66 | 1.82 | 1.55 | 1.49 | 1.52 |
| * The crystal size in Table 1 means the crystal size based on 110 plane and the crystal size based on 200 plane, and the orientation angle means an orientation angle based on 110 plane and an orientation angle based on 200 plane. | | | | | | |

Referring to Table 1, it is confirmed that the para-aramid fiber according to one embodiment is formed from a para-aramid polymer prepared by controlling the addition condition and addition method of the reaction raw material using the reaction raw material from which impurities are removed, and thus, can be provided in various grades of high-quality para-aramid fibers.

Specifically, comparing Examples 1, 2 and 4 with Comparative Example 1, which provide standard tenacity aramid fibers having a tenacity of about 20 to 24 g/d, it is confirmed that Examples 1, 2 and 4 show a larger apparent crystal size, higher crystallinity and higher orientation compared to Comparative Example 1, and further shows more excellent Young's modulus.

In addition, Example 3, which provides a high tenacity aramid fiber having a tenacity of 25 g/d or more, also shows a large apparent crystal size, high crystallinity and high orientation, confirming excellent tensile properties.

**Claims**

1.  A para-aramid fiber comprising a plurality of monofilaments,
    wherein the para-aramid fiber has:

    a crystallinity of 67% or more,
    an orientation angle based on 110 plane of 2 to 12°,
    a total fineness of 200 to 1,600 de, and
    a tenacity of 22 g/d or more.

2.  The para-aramid fiber of claim 1, comprising a para-aramid polymer having an intrinsic viscosity of 4.0 to 9.0 dl/g.

3. The para-aramid fiber of claim 1, comprising a para-aramid polymer having an intrinsic viscosity deviation of 1.0 dl/g or less.

4. The para-aramid fiber of claim 1, comprising a para-aramid polymer having a content of inorganic impurities in the polymer of 50 ppb or less.

5. The para-aramid fiber of claim 1, having an orientation angle based on 200 plane of 2 to 13°.

6. The para-aramid fiber of claim 1, having a crystallinity of 67 to 78%.

7. The para-aramid fiber of claim 1, having an apparent crystal size based on 110 plane of 5.8 to 7.0 nm.

8. The para-aramid fiber of claim 1, having an apparent crystal size based on 200 plane of 5.0 to 6.5 nm.

9. The para-aramid fiber of claim 1, having a paracrystalline parameter of 1.00 to 1.85%.

10. The para-aramid fiber of claim 1, having a Young's modulus of 750 to 900 g/d.

11. The para-aramid fiber of claim 1, having an elongation of 2 to 4%.

12. A preparation method of the para-aramid fiber as set forth in claim 1, the preparation method comprising the steps of:

   filtering a reaction raw material to remove impurities;
   adding an aromatic diamine to a mixed solvent containing an organic solvent and an inorganic salt to form a slurry;
   adding an aromatic diacid halide three or more times to a reactor containing the slurry and then reacting them to form a para-aramid polymer; and
   spinning a spinning dope containing the para-aramid polymer to produce a fiber,
   wherein in the step of forming the polymer, the cooling water temperature difference between a cooling water inlet and a cooling water outlet for cooling the reactor during the primary and secondary additions of the aromatic diacid halide is controlled within 50°C.

13. The preparation method of claim 12, wherein the reaction raw material is filtered using a filter with a diameter of 0.01 to 1.0 $\mu$m.

14. The preparation method of claim 12, wherein a stirring speed of the reactor during the primary addition of the aromatic diacid halide is adjusted to 10 to 1000 rpm.

15. The preparation method of claim 12, wherein the stirring speed of the reactor during the secondary addition of the aromatic diacid halide is adjusted to 10 to 1000 rpm.

# EP 4 332 281 A1

<table>
<tr><td colspan="2">INTERNATIONAL SEARCH REPORT</td><td>International application No.</td></tr>
<tr><td colspan="2"></td><td>**PCT/KR2022/007456**</td></tr>
</table>

**A. CLASSIFICATION OF SUBJECT MATTER**

**D01F 6/60**(2006.01)i; **D01F 6/80**(2006.01)i; **D01F 1/10**(2006.01)i; **D01D 1/10**(2006.01)i; **D01D 5/06**(2006.01)i; **D01D 10/06**(2006.01)i

According to International Patent Classification (IPC) or to both national classification and IPC

**B. FIELDS SEARCHED**

Minimum documentation searched (classification system followed by classification symbols)

D01F 6/60(2006.01); C08G 69/28(2006.01); C08J 5/18(2006.01); D01D 10/02(2006.01); D01D 5/06(2006.01); D01D 5/096(2006.01); D01F 1/10(2006.01); D01F 6/74(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파라 아라미드 섬유 (para-aramid fiber), 필라멘트 (filament), 디아민 (diamine), 방향족 디에시드 할리이드 (aromatic diacid halides)

**C. DOCUMENTS CONSIDERED TO BE RELEVANT**

| Category* | Citation of document, with indication, where appropriate, of the relevant passages | Relevant to claim No. |
|---|---|---|
| X | KR 10-2010-0086996 A (E.I. DU PONT DE NEMOURS AND COMPANY) 02 August 2010 (2010-08-02)<br>See claims 1, 7 and 9; and paragraphs [0020]-[0031] and [0108]. | 1-3,5-8,10-11 |
| Y | | 4,9,12-15 |
| Y | KR 10-0924910 B1 (KOLON CORPORATION) 03 November 2009 (2009-11-03)<br>See paragraphs [0015]-[0029]. | 4,12-15 |
| Y | KR 10-2007-0005504 A (KOLON CORPORATION) 10 January 2007 (2007-01-10)<br>See paragraphs [0081] and [0132]. | 9 |
| A | KR 10-2017-0037967 A (E.I. DU PONT DE NEMOURS AND COMPANY) 05 April 2017 (2017-04-05)<br>See entire document. | 1-15 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **02 September 2022** | **02 September 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2022/007456** |

**C. DOCUMENTS CONSIDERED TO BE RELEVANT**

| Category* | Citation of document, with indication, where appropriate, of the relevant passages | Relevant to claim No. |
|---|---|---|
| A | JP 2007-238695 A (TORAY IND. INC.) 20 September 2007 (2007-09-20)<br>See entire document. | 1-15 |

Form PCT/ISA/210 (second sheet) (July 2019)

**INTERNATIONAL SEARCH REPORT**
**Information on patent family members**

International application No.

**PCT/KR2022/007456**

| Patent document cited in search report | | | Publication date (day/month/year) | Patent family member(s) | | | Publication date (day/month/year) |
|---|---|---|---|---|---|---|---|
| KR | 10-2010-0086996 | A | 02 August 2010 | CN | 101821438 | A | 01 September 2010 |
| | | | | CN | 101821438 | B | 27 March 2013 |
| | | | | EP | 2198078 | A2 | 23 June 2010 |
| | | | | JP | 2011-500977 | A | 06 January 2011 |
| | | | | JP | 5216094 | B2 | 19 June 2013 |
| | | | | US | 2009-0092830 | A1 | 09 April 2009 |
| | | | | US | 7976943 | B2 | 12 July 2011 |
| | | | | WO | 2009-048770 | A2 | 16 April 2009 |
| | | | | WO | 2009-048770 | A3 | 23 July 2009 |
| KR | 10-0924910 | B1 | 03 November 2009 | None | | | |
| KR | 10-2007-0005504 | A | 10 January 2007 | CN | 101218381 | A | 09 July 2008 |
| | | | | CN | 101218381 | B | 11 May 2011 |
| | | | | CN | 101914817 | A | 15 December 2010 |
| | | | | EP | 1899511 | A1 | 19 March 2008 |
| | | | | EP | 1899511 | B1 | 10 October 2012 |
| | | | | JP | 2009-500534 | A | 08 January 2009 |
| | | | | JP | 2011-042921 | A | 03 March 2011 |
| | | | | JP | 4658194 | B2 | 23 March 2011 |
| | | | | JP | 5340246 | B2 | 13 November 2013 |
| | | | | KR | 10-0786202 | B1 | 17 December 2007 |
| | | | | US | 2008-0200640 | A1 | 21 August 2008 |
| | | | | US | 2010-0301516 | A1 | 02 December 2010 |
| | | | | US | 7851061 | B2 | 14 December 2010 |
| | | | | US | 8834755 | B2 | 16 September 2014 |
| | | | | WO | 2007-004848 | A1 | 11 January 2007 |
| KR | 10-2017-0037967 | A | 05 April 2017 | CN | 106536797 | A | 22 March 2017 |
| | | | | CN | 106536797 | B | 26 November 2019 |
| | | | | EP | 3175024 | A1 | 07 June 2017 |
| | | | | EP | 3175024 | B1 | 20 June 2018 |
| | | | | JP | 2017-522465 | A | 10 August 2017 |
| | | | | JP | 6599430 | B2 | 30 October 2019 |
| | | | | US | 2016-0032492 | A1 | 04 February 2016 |
| | | | | US | 9752256 | B2 | 05 September 2017 |
| | | | | WO | 2016-018874 | A1 | 04 February 2016 |
| JP | 2007-238695 | A | 20 September 2007 | None | | | |

Form PCT/ISA/210 (patent family annex) (July 2019)